# EUROPÄISCHE PATENTANMELDUNG

(11) **EP 3 608 272 A1**
(43) Veröffentlichungstag der Anmeldung: **12.02.2020**
(21) Anmeldenummer: 18187674.9
(22) Anmeldetag: 07.08.2018
(51) Int. Cl.: B66B 5/00, G05B 19/048

(54) **INBETRIEBNAHME EINER TÜRSTEUERUNG**

(71) Anmelder: Siemens Aktiengesellschaft, 80333 München (DE)
(72) Erfinder: Nolte, Uwe, 30890 Barsinghausen (DE); Passon, Peter, 30880 Laatzen (DE); Sonntag, Guido, 30989 Gehrden (DE)

(57) **Zusammenfassung**

Die Erfindung betrifft ein Verfahren zur Inbetriebnahme (S6) einer Türsteuerung (100). Um die Inbetriebnahme (S6) der Türsteuerung (100) effizienter und dabei sicherer zu gestalten wird die Inbetriebnahme durchgeführt und/oder initiiert wenn eine erste Freigabe (CL1) von einem ersten Absender (A1) empfangen wurde und eine zweite Freigabe (CL2) von einem von dem ersten Absender (A1) verschiedenen zweiten Absender (A2) empfangen wurde. Weiterhin betrifft die Erfindung eine Türsteuerung (100), ein Aufzugsystem sowie ein Türsystem.

## Beschreibung

Die Erfindung betrifft ein Verfahren zur Inbetriebnahme einer Türsteuerung. Die Erfindung betrifft weiter eine Türsteuerung, ein Aufzugsystem sowie ein Türsystem. Eine Türsteuerung ist eine Steuerung für eine automatische Tür, insbesondere für eine elektrisch angetriebene Schiebetür, wie sie in Aufzügen, Kaufhäusern, auf Bahnsteigen in Werkzeugmaschinen und in vielen weiteren Bereichen zum Einsatz kommen. Für die Inbetriebnahme von Türsteuerungen, insbesondere von elektrisch angetriebenen Schiebetüren, ist es bisher notwendig, mindestens zwei Monteure an der Anlage vor Ort einzusetzen, da die Inbetriebnahme manuell von der Türsteuerung ausgestattet wird. Dies ergibt sich insbesondere aus der Problematik, dass während der Inbetriebnahme Sicherheitsfunktionen nur rudimentär vorhanden sind oder diese gänzlich deaktiviert sind. Die Aufgabe der Monteure vor Ort ist es somit, den Bereich um die Tür gegen Fremdeinwirken zu sichern und die Türsteuerung zu bedienen. Da sich die Türsteuerung oft an Stellen befindet, die schwer zugänglich sind, wie z.B. das Kabinendach eines Aufzugs, sind in der Regel mindestens zwei Monteure vor Ort notwendig.

Es ist die Aufgabe der Erfindung, die Inbetriebnahme einer Türsteuerung effizienter und dabei sicherer zu gestalten.

Zur Lösung dieser Aufgabe wird ein Verfahren zur Inbetriebnahme einer Türsteuerung vorgeschlagen. Die Inbetriebnahme wird demnach durchgeführt und/oder initiiert, wenn eine erste Freigabe von einem ersten Absender empfangen wurde und eine zweite Freigabe von einem von dem ersten Absender verschiedenen zweiten Absender empfangen wurde. Auf diese Art und Weise ist ein zweistufiger Freigabeprozess zum Durchführung und/oder Initiieren der Inbetriebnahme vorgesehen. Dabei ist es zunächst nicht relevant, wo die Freigaben empfangen werden. Relevant ist, dass die Freigaben auf weiteren Informationen basieren, die es ermöglichen die Inbetriebnahme sicher und effizient durchzuführen. Eine oder mehrere der Freigaben können von der Türsteuerung selbst, einer übergeordneten Steuerung, einer zentralen Steuerung und/oder einer zentralen Leitstelle empfangen und ausgewertet werden.

Als Türsteuerung ist eine Steuerung für einen Türantrieb für eine automatische Tür zu verstehen, insbesondere für automatische Schiebe-, Aufzugs-, Werkzeugmaschinen-, Bahnsteig- oder Bahntüren. In der Regel wird dabei zumindest ein Türblatt oder -flügel mit einem Motor über einen Riemen und/oder eine Kette zur Übertragung der Antriebskraft auf das Türblatt angetrieben.

Bei der Inbetriebnahme wird die Türsteuerung auf den Antrieb sowie auf Gegebenheiten der Tür vor Ort angepasst. Dazu zählt u.a. das Anpassen der Türsteuerung auf das Gewicht der Tür, auf die Öffnungsweite sowie auf weitere Funktionen, wie Sicherheitsfunktionen oder vorhandene Lichtschranken. Selbstverständlich kann das erfindungsgemäße Verfahren auch bei einem vollintegrierten Türantrieb zum Einsatz kommen, bei dem der Antrieb inkl. Motor und ggf. Getriebe sowie die Türsteuerung in einem Gehäuse angeordnet sind, wobei aber weiterhin die Türsteuerung an die Gegebenheiten der Tür vor Ort angepasst werden muss.

Die Freigaben sollen nun dazu dienen, sicherzustellen, dass eine Inbetriebnahme durchgeführt werden soll und vor Ort an der Türsteuerung selbst bzw. an der Tür selbst auch die Bedingungen erfüllt sind, dass eine sichere und einfache Inbetriebnahme durchgeführt werden kann. Die Voraussetzungen dafür sind z.B., dass der Antrieb vollständig installiert wurde und sich keine Personen im Gefahrenbereich innerhalb des Bewegungsbereichs der Tür befinden. Der erste Absender könnte dabei beispielsweise eine zentrale Leitstelle, der zweite Absender könnte beispielsweise ein einzelner Techniker vor Ort sein. Es ist aber ebenso denkbar, dass ein erstes zentrales Modul in einer zentralen Leitstelle eine Inbetriebnahme mittels einer ersten Freigabe anfordert und ein zweites zentrales Modul mittels angeschlossener Gebäudesensoren ermittelt, ob diese aktuell, beispielsweise in der Nacht, durchgeführt werden kann, weil keine Personen im Gebäude sind und somit die zweite Freigabe erteilt. Die Türsteuerung kann dann völlig autonom eine Inbetriebnahme durchführen. Weiterhin ist es möglich eine der Freigaben von der Türsteuerung selbst generieren und damit selbst als Absender zur Verfügung zu stellen. ist die Türsteuerung fertig installiert, so könnte diese erkennen, dass eine Inbetriebnahme notwendig ist und eine der notwendigen Freigabe erteilen. Die weitere Freigabe müsste dann von einem anderen Absender stammen, damit sichergestellt ist, dass die eine Inbetriebnahme sicher durchgeführt werden kann.

In einer weiteren Ausführungsform weist die Türsteuerung eine erste Schnittstelle zur Kommunikation mit einer übergeordneten Steuerung auf und zumindest eine Freigabe wird über diese erste Schnittstelle empfangen. Moderne Türsteuerungen weisen neben der Schnittstelle zum Türantrieb ebenso Schnittstellen zu übergeordneten Steuerungssystemen auf. Zu diesen zählen u.a. Aufzugssteuerungen, zentrale Bahnsteigtürsteuerungen (PSD/PSG), zentrale Gebäudetürsteuerungen und weitere derartige Türsysteme. Die Kommunikation zwischen der Türsteuerung und der übergeordneten Steuerung kann dabei beispielsweise über einen CAN-Bus, Ethernet, Profinet oder Profibus, den Europäischen Installationsbus (EIB) oder ähnliche Systeme sowohl drahtgebunden als auch drahtlos geschehen. Es kann sich dabei um eine paketbasierte Kommunikation handeln. Die Schnittstelle ist dementsprechend gemäß dem verwendeten Bus- oder Kommunikationssystem ausgebildet. Gerade bei nachgerüsteten älteren Systemen wäre RS485 eine Möglichkeit. Auch Ethernet-basierte Systeme oder auf dem LON BUS aufgebaute Systeme sind denkbar.

In einer weiteren Ausführungsform umfasst das Verfahren weitere Schritte. Dazu zählt das Empfangen einer ersten Freigabe, das Empfangen einer zweiten Freigabe, das Bestimmen der Absender der ersten Freigabe und/oder der zweiten Freigabe und weiterhin Bestimmen, ob sich die die Absender voneinander unterscheiden.

Weiterhin können die Freigaben in Nachrichten und/oder Telegramme verpackt sein. Damit kann das Verfahren das Empfangen einer ersten Nachricht, das Empfangen einer zweiten Nachricht, das Bestimmen, ob in der ersten Nachricht die erste Freigabe enthalten ist und/oder das Bestimmen, ob in der zweiten Nachricht die zweite Freigabe enthalten ist, umfassen. Eine Nachricht kann dabei als Telegramm eines Netzwerks ausgebildet sein, ebenso als ein Bustelegramm oder eine Busnachricht ausgebildet sein. In der Nachricht können neben der Freigabe noch weitere Informationen, beispielsweise Informationen zur Konfiguration des Türantriebs bzw. der Türsteuerung enthalten sein.

In einer weiteren Ausführungsform wird ein Inbetriebnahmemodus gestartet, wenn die erste und die zweite Freigabe bestimmt wurden. Der Inbetriebnahmemodus unterscheidet sich vom Normalbetrieb der Türsteuerung derart, dass im Inbetriebnahmemodus Konfigurationen des Antriebs vorgenommen werden können, die im Normalbetrieb zu einer Einschränkung der Sicherheit führen würden. Dazu zählen u.a. das Einstellen der Türweite, das Türgewicht oder weitere Konfigurationen hinsichtlich vorhandener Sicherheitsmechanismen wie Reibungsermittlung zur Parametrierung eines Einklemmschutzes.

In einer weiteren Ausführungsform umfasst das Verfahren das Durchführen der tatsächlichen Inbetriebnahme des Türantriebs. Darüber hinaus, ergänzend oder alternativ, umfasst das Verfahren das Beenden eines Inbetriebnahmemodus und/oder das Ausgeben einer Nachricht, wenn der Inbetriebnahmemodus beendet wurde. Diese Nachricht kann beispielsweise von der Türsteuerung selbst an die zentrale übergeordnete Steuerung ausgegeben werden, der somit signalisiert wird, dass der Inbetriebnahmemodus beendet wurde und die Tür sich nun im Normalzustand befindet, also für den bestimmungsgemäßen Betrieb zur Verfügung steht. Die Nachricht kann z.B. dabei über die erste Schnittstelle oder eine drahtlose Schnittstelle ausgegeben werden. Alternativ kann die dritte Nachricht unter Mitwirkung des Monteurs erfolgen sofern ein Eingriff durch den Monteur oder eine Sichtprüfung gefordert ist.

Besonders vorteilhaft ist es, wenn die erste Freigabe von einer zentralen Leitstelle bereitgestellt wird. Diese zentrale Leitstelle kann sich im Gebäude selbst befinden oder mittels moderner Cloudarchitekturen in jeglichen weiteren räumlich entfernten Bereichen angeordnet sein. Auch eine vollautomatisierte Leitstelle ist hier denkbar. Wenn die zentrale Leitstelle über das Internet oder ein vergleichbares Netzwerk angebunden ist, so durchläuft die erste Freigabe zumindest einen Umsetzer bzw. ein Gateway zwischen einem IP-basierten Netzwerk und einem Bussystem bzw. dem in direktem Umfeld der Türsteuerung verwendeten Kommunikationssystem. Entsprechende Protokollumsetzer können ebenso Anwendung finden, um die Nachrichten, die die Freigaben enthalten von einem IP-Protokoll in ein Bus-Protokoll zu wandeln.

In einer weiteren Ausgestaltung wird die erste Freigabe über zumindest ein IP-basiertes Netzwerk übertragen. IP-basierte Netzwerke sind dabei z.B. das Internet, die auf dem so genannten Internetprotokoll basieren, die mittels IPv4 bzw. immer mehr via IPv6 kommunizieren. Als Kommunikationsdienste können dabei UDP oder QUIC eingesetzt werden. Auch die zweite Freigabe kann beispielsweise von einer zentralen Leitstelle über ein IP-basiertes Netzwerk an die Türsteuerung gesandt werden, wobei die zentrale Leitstelle nur als Sammelstelle für Freigabeinformationen von einem oder mehreren unterschiedlichen Absendern, beispielsweise von einem Techniker oder einer Kamera vor Ort dient.

In einer weiteren Ausführungsform wird die zweite Freigabe an der ersten Schnittstelle und/oder an einer zweiten Schnittstelle empfangen. Wenn die Türsteuerung eine zweite Schnittstelle aufweist, z.B. eine lokale Bluetooth-Schnittstelle, mittels derer sich der Monteur mit einem Inbetriebnahmegerät verbinden kann, so kann der Monteur über die zweite Schnittstelle die Freigabe erteilen. Beispielsweise kann über das Internet eine Verbindung mit einer zentralen Leitstelle bestehen, die eine der Freigaben erteilt. So kann ein Monteur direkt und alleine vor Ort den Türantrieb in Betrieb nehmen. Es ist weiter denkbar, dass die Türsteuerung nur eine einzige erste Schnittstelle und keine zweite Schnittstelle aufweist, wobei die Freigabe dann entweder über die zentrale übergeordnete Steuerung erteilt wird oder beispielsweise über ein Schnittstellengerät oder auch ein Randknoten, das/der die zentrale Steuerung umgeht und als Nachrüstlösung angeboten werden kann.

In einer weiteren Ausführungsform weist die zweite Freigabe eine bezüglich des Türantriebs lokale Freigabeinformation auf. Der Türantrieb selbst ist an der Tür angeordnet. Damit bedeutet eine bezüglich des Türantriebs lokale Freigabeinformation, dass die Rahmenbedingungen, die lokal und direkt am Türantrieb herrschen, in diese Freigabeinformation und letztlich in die zweite Freigabe mit einfließen. Damit wird insbesondere Sicherheitsanforderungen Rechnung getragen, da so in die zweite Freigabe Informationen über den aktuellen Betriebs- und Gefährdungszustand der Türsteuerung und des Türantriebs mit einfließen. Dies sind beispielsweise Informationen, ob gerade Personen im Umfeld des Türantriebs anwesend sind und/oder ob der Türantrieb hinreichend abgesichert wurde.

In einer weiteren Ausführungsform führt die Türsteuerung zur Inbetriebnahme zumindest eine Lernfahrt, eine Reibungsermittlung und/oder eine Masseermittlung durch. Als Lernfahrt wird in der Regel ein vollständiges Öffnen und/oder Schließen der Tür bzw. der Türflügel mit langsamer Geschwindigkeit bezeichnet, um die Endpositionen zu ermitteln. Bei einer Reibungsermittlung werden das Gesamtsystem und dessen Reibung bei einem Öffnen und/oder Schließen ermittelt. Eine Masseermittlung ermittelt die Masse der Tür bzw. die Last, die am Türantrieb bzw. vom Türantrieb anzutreiben ist. Alle Parameter können während einer einzigen Lernfahrt ermittelt werden.

Die ermittelten Parameter können zur Parametrierung eines Reglers und/oder zur Begrenzung der Kräfte und/oder kinetischen Energien im System genutzt werden.

In einer weiteren Ausführungsform führt die Türsteuerung, abhängig von einer dritten Freigabe, eine Diagnose durch. Eine Diagnose ist dabei insbesondere eine Selbstdiagnose und umfasst dabei beispielsweise eine Riemenbrucherkennung, eine erneute Masseermittlung um Verschleißerscheinungen zu ermitteln, eine Reibungsermittlung um ggf. Verschmutzung erkennen zu können sowie weitere Verschleißerkennungen wie Riemenermüdung. Die Ergebnisse der Diagnose können anschließend an die zentrale Steuerung bzw. an ein dezentrales System, insbesondere an ein zentrales Cloud-System, auch zentrale Leitstelle genannt, übermittelt werden. Auch die übergeordnete Steuerung kann diese Daten empfangen und auswerten. Frühzeitige Wartung ist demnach ebenso möglich wie ein vorzeitiger Austausch eines vom Ausfall bedrohten Türantriebs. Durch Kenntnis der benötigten Ersatzteile in den betroffenen Anlagen, können diese logistisch in den Wartungseinsätzen zeitlich und örtlich optimal eingeplant werden.

In einer weiteren Ausführungsform wird die erste Freigabe von einer übergeordneten Steuerung bereitgestellt. Dies kann beispielsweise automatisiert geschehen, wenn die übergeordnete Steuerung feststellt, dass alle ihr zugeordneten Türsteuerungen installiert sind, so kann die erste Freigabe automatisch gegeben werden und beispielsweise einem Monteur vor Ort auf einem mobilen Endgerät angezeigt werden. Dieser muss dann lediglich kontrollieren, ob die Inbetriebnahme gefahrlos durchgeführt werden kann und kann dies auf seinem mobilen Endgerät als zweite Freigabe bestätigen.

In einer weiteren Ausführungsform wird die erste Freigabe von einem Randknoten bereitgestellt. Randknoten werden im Englischen auch als so genannte "edge-nodes" bezeichnet, deren Funktion es ist, Cloud-Anwendungen mit lokalen Anwendungen zu verbinden. Man kann also auch von einem so genannten Gateway sprechen, wobei im Vergleich zu herkömmlichen Gateways in den Randknoten auch weitere Funktionalitäten bereitgestellt werden können. Der Randknoten ist somit einerseits mit dem Internet und andererseits mit dem Bussystem verknüpft, über das die übergeordnete Steuerung und die Türsteuerung miteinander kommunizieren. Es ist ebenso denkbar, dass der Randknoten über ein Ethernet-Netzwerk oder ein vergleichbares drahtloses Netzwerk mit der übergeordneten Steuerung verknüpft ist und die übergeordnete Steuerung mit der Türsteuerung über einen CAN-Bus verknüpft ist. Dies ermöglicht eine besondere flexible Erweiterbarkeit.

Die Aufgabe wird weiterhin gelöst durch eine Türsteuerung, die zum Durchführen des erfindungsgemäßen Verfahrens ausgebildet ist. Die Türsteuerung kann dabei zum Auswerten der Freigaben ausgebildet sein. Alternativ oder ergänzend kann ein Telegramm von einer übergeordneten Steuerung oder einem Randknoten vorgesehen sein, in dem die beiden Freigaben zusammengeführt wurden. Die Türsteuerung kann dann dieses Telegramm als Freigabe auswerten. In einer Weiterbildung weist die Türsteuerung einen Prozessor auf, der zum Durchführen und/oder Initiieren einer Inbetriebnahme ausgebildet und/oder konfiguriert ist.

In einer weiteren vorteilhaften Ausführungsform weist die Türsteuerung einen Prozessor auf, der zum Auswerten einer ersten Freigabe von einem ersten Absender und/oder zum Auswerten einer zweiten Freigabe von einem vom ersten Absender verschiedenen zweiten Absender ausgebildet ist. So kann die Türsteuerung auf Basis von zwei Freigaben sicher und zuverlässig entscheiden, ob eine Inbetriebnahme nun sicher durchführbar ist. Auch hier kann ein Telegramm vorgesehen sein, in dem die beiden Freigaben zusammengeführt wurden. Weiterhin kann der Prozessor ebenfalls dazu ausgebildet sein, auszuwerten, dass der erste Absender tatsächlich unterschiedlich vom zweiten Absender ist. Dies kann beispielsweise anhand von Adressinformationen in einem Paket geschehen oder in einem Header in einem Telegramm vorgesehen sein. Diese Auswertung kann aber auch von der übergeordneten Steuerung und/oder einer zentralen Leitstelle durchgeführt werden.

In einer weiteren Ausführungsform weist die Türsteuerung eine erste Schnittstelle auf, die zur Kommunikation mit einer übergeordneten Steuerung ausgebildet ist. Eine derartige Schnittstelle kann als CAN-Bus-Schnittstelle oder weitere gattungsgemäße Bussystemschnittstelle ausgebildet sein. Es ist aber ebenso denkbar, dass hier moderne Ethernet-, WLAN-, oder sogar Mobilfunkschnittstellen zum Einsatz kommen. Über die erste Schnittstelle können dann beispielsweise Ansteuerbefehle einer übergeordneten Steuerung, Konfigurationsdaten und die Freigaben für eine Inbetriebnahme übermittelt werden. Auch Diagnosedaten und sog. Condition-Monitoring-Daten können über diese Schnittstelle übermittelt werden.

In einer weiteren vorteilhaften Ausführungsform ist die Türsteuerung derart ausgebildet, dass sie bei einer Inbetriebnahme eine Lernfahrt, eine Reibungsermittlung und/oder eine Masseermittlung durchführt.

Die Aufgabe wird weiterhin durch ein Aufzugsystem mit einer oder mehreren übergeordneten Steuerungen gelöst, die als Aufzugsteuerungen ausgebildet sind, und einer oder mehreren erfindungsgemäßen Türsteuerungen. Die Aufzugsteuerung ist dabei zum Ansteuern des Aufzugs selbst und dessen Türen ausgebildet. hier ist denkbar, dass die Aufzugsteuerung jedes Stockwerk abfährt und in jedem Stockwerk eine Inbetriebnahme automatisiert durchführt. Dies kann beispielsweise dazu dienen unterschiedliche Türweiten zu bestimmen und für jedes Stockwerk einen eigenen Satz Parameter zu ermitteln.

Die Aufgabe wir weiterhin durch ein Türsystem mit einer oder mehreren Türsteuerungen und einer oder mehreren übergeordneten Steuerungen gelöst. Die Türsteuerungen weisen dazu eine erste Schnittstelle zur Kommunikation mit der/den übergeordneten Steuerung/en auf. Zumindest eine der übergeordneten Steuerungen ist zum Bereitstellen einer ersten Freigabe über die erste Schnittstelle ausgebildet. Zumindest eine der Türsteuerungen ist zum Auswerten der ersten Freigabe ausgebildet. In einer vorteilhaften Weiterbildung ist das Türsystem als ein Aufzugtürsystem, ein Bahnsteigtürsystem oder ein Gebäudetürsystem ausgebildet.

Die Aufgabe wird weiterhin durch eine zentrale Steuerung gelöst, die zum Initiieren der Inbetriebnahme ausgebildet ist, wenn eine erste Freigabe von einer im System befindlichen Steuerung und/oder Leitstelle von einem ersten Absender empfangen wurde und eine zweite Freigabe von der oder einer weiteren im System befindlichen Steuerung und/oder Leitstelle von einem von dem ersten Absender verschiedenen zweiten Absender empfangen wurde. Die Aufgabe wird weiterhin gelöst durch eine übergeordnete Steuerung, die analog zur zentralen Steuerung ausgebildet ist. Die Aufgabe wird weiterhin gelöst durch eine Leitstelle, die analog zur zentralen Steuerung ausgebildet ist. Es ist darauf hinzuweisen, dass die Schritte des Verfahrens beliebig auf verschiedene oder einzelne im System vorhandene Steuerungen/Leitstellen aufgeteilt werden können.

Im Folgenden wird die Erfindung anhand der in den Figuren dargestellten Ausführungsbeispiele näher beschrieben und erläutert. Es zeigen:
- FIG 1: ein automatisches Türantriebssystem,
- FIG 2: eine weitere Ausgestaltung eines Türsystems,
- FIG 3: ein Aufzugtürsystem,
- FIG 4: ein Bahnsteigtürsystem und
- FIG 5: ein Ablaufdiagramm einer Ausführungsform des Verfahrens.

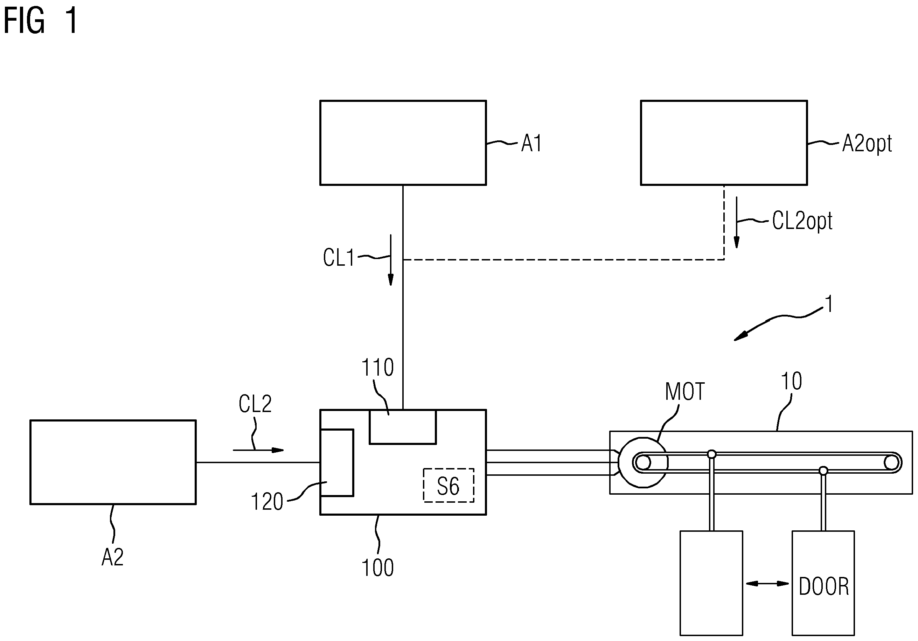

FIG 1 zeigt ein automatisches Türantriebssystem 1, das in diesem Fall von einem Elektromotor MOT angetrieben wird. Eine Türsteuerung 100 stellt Ansteuerungsfunktionen für den Motor MOT sowie Kommunikationsfunktionen zur Inbetriebnahme S6 zur Verfügung. Die Ansteuerungsfunktionen können dabei sowohl Schaltsignale für Leistungsbauelemente, z.B. dreiphasige PWM Signale, als auch die tatsächliche Bereitstellung der Leistung für den Motor, z.B. in Form einer dreiphasigen Spannung, die mittels eines Raumzeigers geregelt wird, sein. Die Türsteuerung 100 weist eine erste Schnittstelle 110 sowie eine zweite Schnittstelle 120 auf. Schematisch ist angedeutet, dass ein erster Absender A1 sowie ein zweiter Absender A2 jeweils eine erste Freigabe CL1 sowie eine zweite Freigabe CL2 an die Türsteuerung 100 senden. Die Türsteuerung 100 kann somit eine Inbetriebnahme S6 sicher initiieren und/oder durchführen. Die Trennung der beiden Absender A1, A2 ermöglicht es, die Anforderung der Inbetriebnahme S6 von der Bestätigung der tatsächlichen Möglichkeit der Inbetriebnahme S6 vor Ort zu trennen. Mit einer gestrichelten Linie ist ein optionaler zweiter Absender A2opt eingetragen. Dies soll darstellen, dass eine optionale zweite Freigabe CL2opt auch über die erste Schnittstelle 110 an die Türsteuerung 100 übertragen werden kann. Der optionale zweite Absender kann dabei anstelle des zweiten Absenders A2 treten, sofern dieser ebenso beurteilen kann, ob eine Inbetriebnahme S6 durchführbar ist.

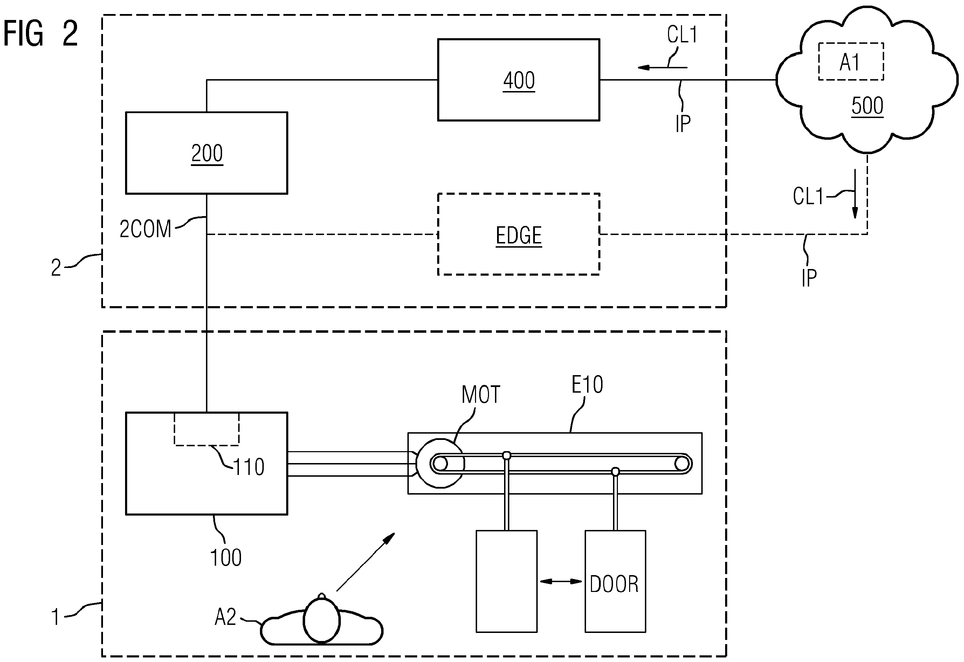

FIG 2 zeigt die im Wesentlichen aus FIG 1 bekannte Türsteuerung 100 im Türantriebssystem 1. Der zweite Absender A2 ist hier als eine visuelle Bestätigung vor Ort am Türantriebssystem 1 angedeutet. Diese visuelle Bestätigung kann beispielsweise ein Kamerasystem oder ein Monteur vor Ort sein. Die Türsteuerung 100 ist über eine erste Schnittstelle 110 mit einer übergeordneten Steuerung 200 verbunden. Eine Kommunikationsverbindung 2COM verbindet die erste Schnittstelle 110 mit der übergeordneten Steuerung 200 und kann beispielsweise als eine lokale Kommunikationsverbindung, wie ein CAN-Bussystem (z.B. CANopen), ein europäischer Installationsbus EIB, BACnet (Gebäudeautomatisierung) oder weitere derartige Bussysteme ausgebildet sein. Auch industrielle Systeme wie beispielsweise Profinet oder Profibus können zur Anwendung kommen. Die übergeordnete Steuerung 200 ist mit einer zentralen Steuerung 400 verbunden. Die zentrale Steuerung 400 kann weitere, nicht dargestellte, übergeordnete Steuerungen 200 ansteuern und ist beispielsweise in einem Gebäude als eine Gebäudesteuerung ausgebildet sein, die mehrere übergeordnete Steuerungen 200 ansteuert, z.B. sowohl Aufzüge inkl. Türen als auch die Gebäudetüren. Die übergeordnete Steuerung 200 kann von der zentralen Steuerung 400 angesteuert werden und zur Inbetriebnahme S6 der Türsteuerungen 100 aufgefordert werden.

Eine zentrale Leitstelle 500 ist über ein IP-basiertes Netzwerk IP mit der übergeordneten Steuerung 200, insbesondere mittels einer zentralen (Gebäude-)Steuerung 400 verbunden. Die zentrale Leitstelle 500 kann dabei mehrere Gebäude bzw. mehrere separate Ebenen oder Einheiten in einem Gebäude zentral verwalten. So genannte Cloud-Infrastrukturen sind hier besonders geeignet. In der in FIG 2 dargestellten Ausführungsform ist es möglich, dass die zentrale Leitstelle 500 feststellt, dass zumindest die Steuerungen 100, 200, 400 eingeschaltet und kommunikationsbereit sind und nun einer Inbetriebnahme bedürfen. So ist es möglich, dass die zentrale Leitstelle 500 Konfigurationsdaten für die zentrale Steuerung 400 bereitstellt, wobei die zentrale Steuerung 400 wiederum Konfigurationsdaten extrahieren kann und die übergeordnete Steuerung 200 konfigurieren kann. Die zentrale Leitstelle 500 sendet über das IP-basierte Netzwerk IP eine erste Freigabe CL1 für die Inbetriebnahme der Türsteuerung 100. Die zentrale Leitstelle 500 dient dabei als erster Absender A1.

Alternativ und/oder ergänzend ist die zentrale Leitstelle 500 über ein weiteres IP-basiertes Netzwerk IP mit einem Randknoten EDGE verbunden. Der Randknoten EDGE kann beispielsweise zur Nachrüstung bestehende Systeme verwendet werden und zur Umsetzung einer ersten Freigabe CL1 in die lokale Kommunikationsverbindung 2COM ausgebildet sein. So ist es möglich, mit wenigen Geräten eine zentrale Leitstelle 500 über den Randknoten EDGE anzubinden und diesen direkt mit einer oder mehreren Türsteuerungen 100 und/oder einen oder mehreren übergeordneten Steuerungen 200 zu verbinden. Dies ermöglicht eine einfache Nachrüstung von bestehenden Systemen. Der Randknoten Edge kann Teil einer Türsteuerung 100, einer übergeordneten Steuerung 200 oder ein eigenständiges Gerät sein.

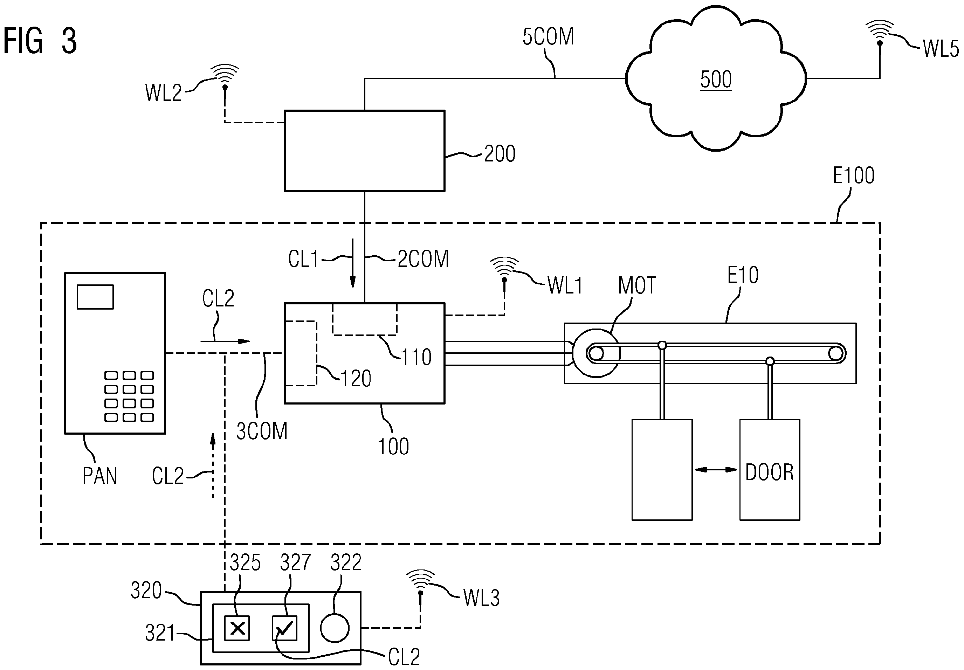

FIG 3 zeigt schematisch eine automatische Aufzugtür E10 in einem Aufzugtürsystem E100. Die Türsteuerung 100 ist ähnlich der Türsteuerung aus FIG 1 aufgebaut. Sie weist eine erste Schnittstelle 110 und eine zweite Schnittstelle 120 auf, wobei die erste Schnittstelle 110 über eine lokale Kommunikationsverbindung 2COM mit einer übergeordneten Steuerung 200, hier eine Aufzugsteuerung zur Steuerung eines oder mehrerer Aufzüge inkl. deren Türen, verbunden ist. Die übergeordnete Steuerung 200 ist mittels einer weiteren Kommunikationsverbindung 5COM mit einer zentralen Leitstelle 500 verbunden. Die weitere Kommunikationsverbindung 5COM kann auf einem IP-basierten Protokoll basieren. Die zentrale Leitstelle 500 kann über die Kommunikationsverbindungen 2COM, 5COM auf sämtliche Türsteuerungen 100 zugreifen, diese ansteuern oder zumindest deren Daten und/oder Zustände auslesen. Die Türsteuerung 100 ist weiterhin mit einem Aufzugpanel PAN verbunden sowie mit einem mobilen Endgerät 320. Die zweite Schnittstelle 120 kommuniziert dabei über eine dritte Kommunikationsverbindung 3COM mit dem Aufzugpanel PAN sowie mit dem mobilen Endgerät 320. Dies kann eine kabelgebundene Kommunikation sein, wobei das mobile Endgerät beispielsweise in einen Servicezugang am Panel PAN eingesteckt werden kann. Dies ermöglicht direkt das verifizieren, dass ein Monteur vor Ort ist und dieser eine Freigabe CL1, CL2 erteilen kann.

Das Aufzugpanel PAN ist in der Regel in der Aufzugkabine selbst angeordnet und weist verschiedene Taster auf, um einzelne Stockwerke anwählen zu können. Moderne Aufzugpanels PAN weisen weiterhin ein Display auf, auf dem weitere Informationen angezeigt werden. Oft ist auch eine Gegensprechanlage vorhanden. Es ist nun denkbar, dass der Monteur sich innerhalb des Aufzugs befindet und die zweite Freigabe CL2 über eine Eingabe über das Aufzugpanel PAN erteilt. Denkbar ist beispielsweise, dass das Panel eine NFC Verbindung anbietet und der Monteur so mit dem mobilen Endgerät 320 validieren kann, dass er tatsächlich vor Ort ist. Auch ein QR-Code im Display des Panels PAN ist zum Auslesen durch das mobile Endgerät 320 denkbar. Weitere lokale Funklösungen sind denkbar, die eine Validierung ermöglichen, dass die zweite Freigabe vor Ort erteilt wurde bzw. auf einer lokalen Information vor Ort basiert.

Ebenso ist denkbar, dass das mobile Endgerät 320, das in diesem Fall einen Not-Aus-Taster 322 sowie ein Display 321 aufweist, über die dritte Kommunikationsverbindung 3COM mit der Türsteuerung 100 verbunden ist. Das mobile Endgerät 320 zeigt auf dessen Display einen Zustimmen-Button 327 und einen Ablehnen-Button 325 an. Mit dem Zustimmen-Button 327 kann das mobile Endgerät 320 bzw. dessen Bediener als zweiter Absender A2 fungieren und eine zweite Freigabe CL2 über eine der vorhandenen Kommunikationsverbindungen an die Türsteuerung 100 senden. Der Notaustaster 322 kann von einem Monteur im Notfall verwendet werden um den Motor MOT zu deaktivieren.

Zusätzlich zur eingangs genannten Möglichkeit, das mobile Endgerät 320 kabelgebunden über einen Servicezugang zu verbinden weist das mobile Endgerät hier auch eine drahtlose Schnittstelle WL3 auf. Über die drahtlose Schnittstelle WL3 kann direkt die Türsteuerung 100 über deren drahtlose Schnittstelle WL1 kontaktiert werden und/oder über die zentrale Leitstelle 500 und einer zentralen drahtlosen Schnittstelle WL5 übermittelt werden. Dabei müssen die jeweiligen Geräte nicht unbedingt selbst eine drahtlose Schnittstelle WL1, WL3, WL5 aufweisen, sondern es genügt, wenn diese in ein Netzwerk eingebunden sind, in dem eine drahtlose Schnittstelle WL1, WL2 zur Verfügung steht. So kann beispielsweise die zentrale Leitstelle 500 über ein reguläres Mobilfunknetz für das mobile Endgerät 320 erreichbar sein. Sicherheitsmechanismen wie VPN, HTTPS, etc. sollten dabei standardmäßig zum Einsatz kommen. Es ist ebenso denkbar, dass die drahtlose Schnittstelle WL1 der Türsteuerung 100 als ein Nahfeldfunkprotokoll wie Bluetooth oder NFC ausgebildet ist. Weiterhin ist denkbar, dass die übergeordnete Steuerung 200 mittels eines WLAN als drahtlose Verbindung WL2 erreichbar ist. Jegliche dieser Möglichkeiten sind untereinander austauschbar und miteinander kombinierbar. Moderne Chips für Drahtloskommunikation bieten beispielsweise NFC, Bluetooth 4.1 und 802.11ac WiFi in einem an. Eine Türsteuerung 100 oder eine zentrale Steuerung 200 mit einem derartigen Kommunikationsmodul eröffnet dementsprechend viele Freiheitsgrade bei der Inbetriebnahme.

Die in FIG 3 genannten Ausführungsformen sind nicht auf Aufzüge beschränkt, sondern können ebenso für reguläre Gebäudetüren, Bahnsteigtüren oder weitere automatische Türen angewandt werden.

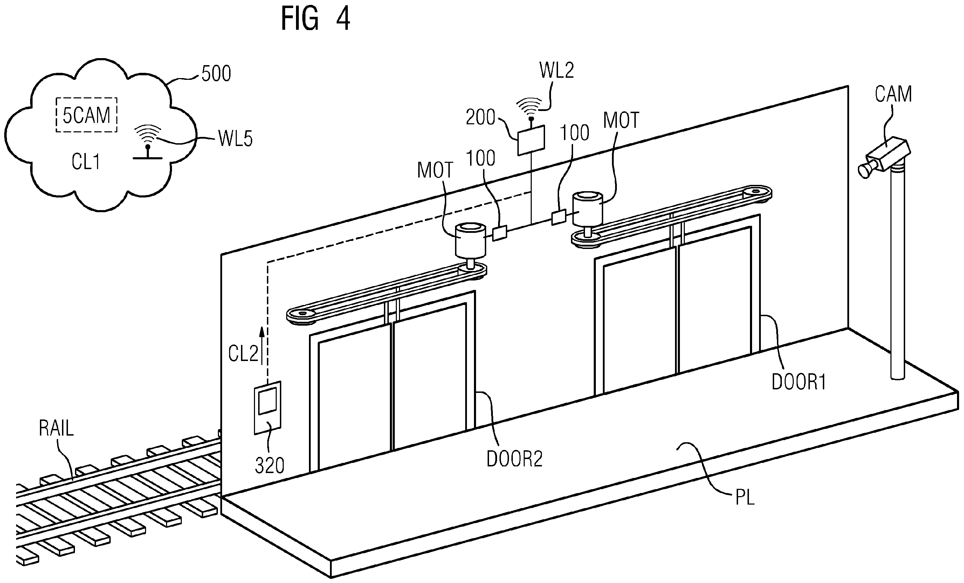

FIG 4 zeigt einen Bahnsteig PL, mit einer ersten automatischen Tür DOOR1 und einer zweiten automatischen Tür DOOR2, die jeweils einen Motor MOT aufweisen und die über eine eigene Türsteuerung 100 angesteuert und angetrieben werden. Weiterhin ist eine übergeordnete Steuerung 200 vorgesehen, die in diesem Ausführungsbeispiel eine drahtlose Verbindung WL2 aufweist. Ein mobiles Endgerät 320, das in diesem Fall auch an der Wand montierbar ist oder alternativ als festes wandmontiertes Element ausführbar ist, ist ebenfalls über eine Kommunikationsverbindung mit der übergeordneten Steuerung 200 sowie den Türsteuerungen 100 verbunden. Das mobile Endgerät 320 kann somit zur direkten Konfiguration der Türsteuerungen 100 sowie zur Kommunikation mit der übergeordneten Türsteuerung 200 verwendet werden. Eine zweite Freigabe CL2 ist direkt über das mobile Endgerät 320 erteilbar.

Es ist ebenso denkbar, dass in der zentralen Leitstelle 500 Bilder einer Kamera CAM vom Bahnsteig PL und den Schienen RAIL derart ausgewertet werden, dass die zentrale Leitstelle eine Freigabe auf Basis der Informationen durch die Kamera CAM erteilen kann. Sind bspw. keine Menschen vor Ort so kann eine Inbetriebnahme oder Diagnose durchgeführt werden. Die zentrale Leitstelle weist dazu ein Auswertemodul 5CAM aufweist, dass zur Auswertung des Kamerasignals der Kamera CAM und zum erteilen einer Freigabe CL1, CL2 ausgebildet ist. Selbst wenn beide Freigaben CL1, Cl2 von der zentralen Leitstelle kommen gilt das Auswertemodul 5CAM dann als verschiedener Absender, da eine weitere Information zur Verfügung steht und so eine sichere Inbetriebnahme der Türen DOOR1, DOOR2 bzw. deren Türsteuerungen 100 gewährleistet werden kann. Die in FIG 4 genannten Ausführungsformen sind nicht auf Bahnsteigtüren beschränkt, sondern können ebenso für reguläre Gebäudetüren, Aufzüge oder weitere automatische Türen angewandt werden.

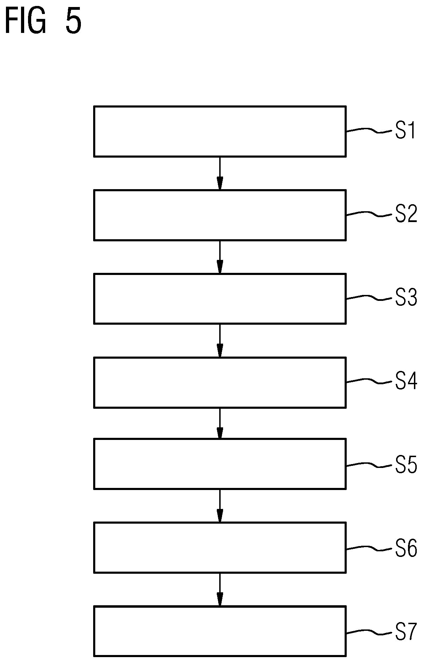

FIG 5 zeigt ein Ablaufdiagramm einer möglichen Ausführungsform des erfindungsgemäßen Verfahrens. Eine mögliche Reihenfolge wäre:
S1: Empfangen S1 einer ersten Freigabe CL1.
S2: Empfangen S2 einer zweiten Freigabe CL2.
S3: Bestimmen S3 der Absender A1, A2 der ersten Freigabe CL1 und/oder der zweiten Freigabe CL2.

Empfangen S1 und S2 sind dabei beliebig untereinander austauschbar. Bestimmen S3 kann aufgeteilt werden, so dass sofort nach Empfang einer Freigabe CL1 oder CL2 deren Absender A1 oder A2 bestimmt werden kann. Bestimmen S4, ob sich die Absender A1, A2 voneinander unterscheiden kann in einem Schritt mit Bestimmen S3 oder völlig davon getrennt, selbst in einer anderen Soft-/Hardware durchgeführt werden. Als optional anzusehen ist Starten S5 eines Inbetriebnahmemodus, wenn dieser vorgesehen ist. Wenn ein Inbetriebnahmemodus vorgesehen ist, wird dieser gestartet, wenn die Unterscheidung der Absender A1, A2 der Freigaben CL1, CL2 bestimmt wurde. Der Inbetriebnahmemodus ist aber keine zwingende Voraussetzung. Weiterhin kann das Initiieren der Inbetriebnahme S6 durchgeführt werden und schließlich das tatsächliche Durchführen der Inbetriebnahme S6. Wenn ein Inbetriebnahmemodus vorgesehen ist, ist optional das Beenden S7 eines Inbetriebnahmemodus und ebenfalls optional das Signalisieren, z.B. mittels einer Nachricht und/oder eines Telegramms, einer Betriebsbereitschaft wenn der Inbetriebnahmemodus beendet wurde. Die Nachricht/das Telegramm können über sämtliche Kommunikationsverbindungen bereitgestellt werden und zwischen ihnen umgesetzt werden.

Im Folgenden soll der Schritt Bestimmen S3 der Absender A1, A2 der ersten Freigabe CL1 und/oder der zweiten Freigabe CL2 näher ausgeführt werden. Die Freigaben CL1, CL2 können in Nachrichten und/oder Telegramme verpackt sein, die beispielsweise über ein IP-basiertes Netzwerk übertragen werden können. Derartige Nachrichten weisen in Headern Absenderinformationen auf, die zum Zweck des Bestimmens S3 ausgewertet werden können. Auch kryptographische Signaturen sind hier als Absenderinformation verwendbar. Es ist weiterhin denkbar, dass in einer einzigen Nachricht von z.B. einer zentralen Leitstelle 500, wie sie aus den vorhergehenden Figuren bekannt ist, die erste und die zweite Freigabe CL1, CL2 jeweils mit einer Information über deren Absender A1, A2 bzw. einem bereits zur Verfügung gestellten Vergleich, dass die Absender unterschiedlich sind, zur Verfügung gestellt werden. Die Absender können dabei kryptografische Kennungen, Signaturen, Zertifikate oder weitere Identifikationsmaßnahmen umfassen.

Im Folgenden soll der Schritt Bestimmen S4, ob sich die die Absender A1, A2 voneinander unterscheiden näher ausgeführt werden. Es besteht somit die Möglichkeit, dass die Türsteuerung 100 selbst dazu dient, die Absender voneinander zu unterscheiden. Alternativ oder ergänzend kann die Türsteuerung 100 von der übergeordneten Steuerung 200 eine sicheren Paarung von verschiedenen Absendern A1, A2, wie sie beispielsweise mit Zertifikate möglich ist, zur Initiierung einer Inbetriebnahme aufgefordert werden kann, wobei dazu die Freigabe von zwei verschiedenen Absendern bereits durch die übergeordnete Steuerung 200, eine zentrale Steuerung 400 oder eine zentrale Leitstelle 500 ausgewertet wurde. Der Schritt S4 ist somit sowohl in der Türsteuerung 100 selbst ausführbar, es ist aber ebenso möglich, in einer übergeordneten Steuerung 200 oder in der zentralen Leitstelle 500 diesen Schritt durchzuführen. Es ist möglich, dass die Türsteuerung 100 das Bestimmen S4 in einer der Steuerung 200, 400, 500 initiiert und das Ergebnis anfordert.

Es ist denkbar, dass ein zur Inbetriebnahme ausgebildeter Inbetriebnahmemodus gestartet wird, sobald die entsprechenden Freigaben vorliegen. Der Inbetriebnahmemodus kennzeichnet sich durch die Möglichkeit aus, die Türen zu verfahren, ohne grundlegende Informationen, die für sicherheitsrelevante Funktionen relevant sind, vorliegen zu haben. Ein Inbetriebnahmemodus kann ebenso Diagnosefunktionen umfassen. Alternativ ist es auch möglich, dass ein Diagnosemodus Inbetriebnahmefunktionen umfasst. Das tatsächliche Durchführen der Inbetriebnahme S6 kann diverse Lernfahrten wie Masse, Reibungs- und/oder Lastbestimmungen umfassen. Auch Riemenbrucherkennungen und weitere Diagnosen, die eine korrekte Installation des Antriebs bzw. eine korrekte Kontaktierung der Türsteuerung 100 in Verbindung mit den Motoren MOT indiziert, können automatisiert durchgeführt werden. In einem Schritt Beenden S7 kann ein evtl. gestarteter Inbetriebnahmemodus INIT beendet werden, dies kann weiterhin in einer Nachricht an die weiteren beteiligten Komponenten kommuniziert werden. Führt also beispielsweise die Türsteuerung 100 selbsttätig die Inbetriebnahme durch, so kann diese nach der Inbetriebnahme S6 eine Nachricht ausgeben, und diese an die übergeordnete Steuerung 200 und/oder eine zentrale Steuerung 400 und/oder eine zentrale Leitstelle 500 kommunizieren.

Generell sind die in FIG 1 bis FIG 5 gezeigten Ausführungsformen lediglich als Beispiele zu verstehen und beliebig untereinander kombinierbar. Es ist somit denkbar, dass in einem Gebäude sowohl Gebäudetüren als auch Aufzugtüren Anwendung finden. Auf einem Bahnsteig ist es sogar möglich, dass mit einer einzigen zentralen Steuerung 400 sowohl Aufzug-, Bahnsteig-, als auch Gebäudetüren des Bahnsteigs angesteuert werden. Des Weiteren ist zu beachten, dass die Funktionalität der Türsteuerung 100 und der zentralen Steuerung 200 nicht zwangsläufig auf eigene Hardwarekomponenten beschränkt ist, sondern diese untereinander kombinierbar sind und als Softwarekomponenten ausgestaltet sein können. Master-Steuereinheiten können beispielsweise die Funktionen einer übergeordneten Steuerung 200 mit der einer Türsteuerung 100 kombinieren. Auch zentrale Steuerungen 400 können die Funktionalitäten von übergeordneten Steuerungen 200 in Hard- und/oder Software integrieren.

Zusammenfassend betrifft die Erfindung ein Verfahren zur Inbetriebnahme S6 einer Türsteuerung 100. Um die Inbetriebnahme S6 der Türsteuerung 100 effizienter und dabei sicherer zu gestalten wird die Inbetriebnahme durchgeführt und/oder initiiert wenn eine erste Freigabe CL1 von einem ersten Absender A1 empfangen wurde und eine zweite Freigabe CL2 von einem von dem ersten Absender A1 verschiedenen zweiten Absender A2 empfangen wurde. Weiterhin betrifft die Erfindung eine Türsteuerung 100, ein Aufzugsystem sowie ein Türsystem.

## Patentansprüche

1. Verfahren zur Inbetriebnahme (S6) einer Türsteuerung (100) umfassend:
Durchführen und/oder Initiieren der Inbetriebnahme (S6) wenn eine erste Freigabe (CL1) von einem ersten Absender (A1) empfangen wurde und eine zweite Freigabe (CL2) von einem von dem ersten Absender (A1) verschiedenen zweiten Absender (A2) empfangen wurde.

2. Verfahren nach Anspruch 1, wobei die Türsteuerung (100) eine erste Schnittstelle (110) zur Kommunikation mit einer übergeordneten Steuerung (200) aufweist und zumindest eine Freigabe (CL1, CL2) über die erste Schnittstelle (110) empfangen wird.

3. Verfahren nach einem der vorhergehenden Ansprüche, ferner umfassend:
- Empfangen (S1) einer ersten Freigabe (CL1),
- Empfangen (S2) einer zweiten Freigabe (CL2),
- Bestimmen (S3) der Absender (A1, A2) der ersten Freigabe (CL1) und/oder der zweiten Freigabe (CL2) und
- Bestimmen (S4), ob sich die die Absender (A1, A2) voneinander unterscheiden.

4. Verfahren nach einem der vorhergehenden Ansprüche, ferner umfassend:
Starten (S5) eines Inbetriebnahmemodus (INIT), wenn die erste Freigabe (CL1) und die zweite Freigabe (CL2) bestimmt wurden.

5. Verfahren nach einem der vorhergehenden Ansprüche, ferner umfassend:
- Durchführen der Inbetriebnahme (S6) und optional
- Beenden (S7) eines Inbetriebnahmemodus (INIT) und/oder Ausgeben einer Nachricht wenn der Inbetriebnahmemodus (INIT) beendet wurde.

6. Verfahren nach einem der vorhergehenden Ansprüche, wobei die erste Freigabe (CL1) von einer zentralen Leitstelle (500) bereitgestellt wird.

7. Verfahren nach einem der vorhergehenden Ansprüche, wobei die erste Freigabe (CL1) über zumindest ein IP basiertes Netzwerk übertragen wird.

8. Verfahren nach einem der vorhergehenden Ansprüche, wobei die zweite Freigabe (CL2) an der ersten Schnittstelle (110) und/oder an einer zweiten Schnittstelle (112) empfangen wird.

9. Verfahren nach einem der vorhergehenden Ansprüche, wobei die zweite Freigabe (CL2) eine bezüglich eines Türantriebs lokale Freigabeinformation (INFO) aufweist.

10. Verfahren nach einem der vorhergehenden Ansprüche, wobei die Türsteuerung (100) zur Inbetriebnahme (S6) eine Lernfahrt, eine Reibungsermittlung und/oder eine Masseermittlung durchführt.

11. Verfahren nach einem der vorhergehenden Ansprüche, wobei die Türsteuerung (100) abhängig von einer dritten Freigabe (CL3) eine Diagnose, insbesondere eine Selbstdiagnose, durchführt.

12. Verfahren nach einem der vorhergehenden Ansprüche, wobei die erste Freigabe (CL1) von einer übergeordneten Steuerung (200) als Absender (A1, A2) bereitgestellt wird.

13. Verfahren nach einem der vorhergehenden Ansprüche, wobei die erste Freigabe (CL1) von einem Randknoten (EDGE) als Absender (A1, A2) bereitgestellt wird.

14. Türsteuerung (100) ausgebildet zur Durchführung eines Verfahrens nach einem der vorhergehenden Ansprüche.

15. Türsteuerung (100) nach Anspruch 14, aufweisend einen Prozessor, der zum Auswerten einer erste Freigabe (CL1) von einem ersten Absender (A1) und oder zum Auswerten einer zweite Freigabe (CL2) von einem vom ersten Absender (A1) verschiedenen zweiten Absender (A2) ausgebildet ist.

16. Türsteuerung (100) nach einem der Ansprüche 14 oder 15, aufweisend eine erste Schnittstelle (110), die zur Kommunikation mit einer übergeordneten Steuerung (200) ausgebildet ist.

17. Türsteuerung (100) nach einem der Ansprüche 14 bis 16, die derart ausgebildet ist, dass sie bei einer Inbetriebnahme eine Lernfahrt, eine Reibungsermittlung und/oder eine Masseermittlung durchführt.

18. Aufzugsystem mit einer oder mehreren übergeordneten Steuerungen (200), die als Aufzugsteuerungen ausgebildet sind, und einer oder mehreren Türsteuerungen nach einem der Ansprüche 14 bis 17.

19. Türsystem mit einer oder mehreren Türsteuerungen (100) gemäß einem der Ansprüche 14 bis 17 und einer oder mehreren übergeordneten Steuerungen (200), wobei die Türsteuerungen (100) eine erste Schnittstelle (110) zur Kommunikation mit der/den übergeordneten Steuerung/en (200) aufweist, wobei zumindest eine der übergeordneten Steuerungen (200) zum Bereitstellen einer ersten Freigabe (CL1) über die erste Schnittstelle (110) ausgebildet ist und wobei zumindest eine der Türsteuerungen (100) zum Auswerten der ersten Freigabe (CL1) ausgebildet ist.

20. Türsystem nach Anspruch 19, wobei das Türsystem als ein Aufzugtürsystem, ein Bahnsteigtürsystem oder ein Gebäudetürsystem ausgebildet ist.
